# EUROPEAN PATENT APPLICATION

(11) **EP 2 144 046 A2**
(43) Date of publication of application: **13.01.2010**
(21) Application number: 09161753.0
(22) Date of filing: 03.06.2009
(51) Int. Cl.: G01K 1/16, G01K 7/42

(54) **A temperature sensitive and temperature determining arrangement**

(30) Priority: 10.07.2008 SE 0801664
(71) Applicant: Akerlund, John, 181 42 Lidingö (SE); Ottosson, Jan, S-127 42 Skärholmen (SE)
(72) Inventor: Akerlund, John, 181 42 Lidingö (SE); Ottosson, Jan, S-127 42 Skärholmen (SE)
(74) Representative: Lindblom, Erik J

(57) **Abstract**

The present invention comprises a temperature sensitive and temperature determining arrangement (1) including:
a. a temperature sensing sensor unit (22),
b. a sensor body heatable by an electric current (2),
c. a base plate (12) conducting heat energy generated by the sensor body and
d. one or more cooling bodies (32) conducting heat energy within and from the base plate (12),

whereby the sensor body (2) is attached to the base plate (12) in such a way that effective heat transfer occurs between the sensor body (2) and the base plate (12). The effective heat transfer must be adapted to take place via a heat conducting foil (10), wherein this foil (10) is adapted to display a cutout (11). Within said cutout (11) said sensor unit (22) is fixed to the base plate (12) in such a way that effective heat transfer occurs between the sensor unit (22) and the base plate (12).

The base plate (12) displays a second surface length (12b), divided into a first surface area (12b1) and a second surface area (12b2), wherein the first surface area (12b1) cooperates directly across a foil (10) with the cooling body (32) while the second surface area (12b2) does not cooperate directly with the cooling body (32). The sensor unit (22) is directly or indirectly attached to the second surface area (12b2),

It is suggested that Figure 3 be appended to the summary in connection with publication.

## Description

### TECHNICAL FIELD OF THE INVENTION

The present invention relates generally to a temperature sensitive arrangement and more specifically to a temperature detecting and/or determining arrangement, in which it is to be possible to disconnect a current fed electric and/or electronic circuit as soon as a detected and determined temperature exceeds and/or tends to exceed a predetermined value.

More specifically the present invention is related to a temperature sensitive arrangement such that it will be able to provide rapid disconnection of a feed current to an electronic circuit or an electric circuit arrangement in order to protect sensitive electrical, electronic circuits, chips and/or transistors from overloads as a result of overheating.

The intended application of the invention is consequently in the event of rapidly occurring, increasing current feeds and/or current variations, which are normally associated with short circuit currents.

The present invention is intended to be based on a temperature sensitive arrangement such that, connected to a current fed circuit arrangement, with a voltage source, a connecting and/or disconnecting unit for the feed current and one or more voltage and current feeding electrical circuits, which must at least comprise:
a. a sensor unit adapted to sensing of the temperature,
b. a first circuit arrangement connected to the sensor unit, in order to determine an instantaneously occurring temperature,
c. a sensor body, such as a chip with transistors, enabling an electric current to flow through and heatable by instantaneous current values,
d. among other things, a part of the base plate absorbing the heat energy thus generated within the sensor body and
e. one or more cooling bodies to which a part of the heat energy absorbed by the base plate is adapted to be transferred.

Furthermore, the present invention is based on a design such that the sensor body must be fixed to one (the inner) of the two surface lengths of the base plate such that effective heat transfer will take place between the sensor body and the base plate, whereas the oppositely placed and other (outer) surface length of the base plate is related to the cooling body such that effective heat transfer will take place between the base plate and the cooling body.

### Definitions:

**High thermal capacity**. (A body or a co-ordination of bodies which can offer high thermal heat storage at a low temperature rise in the case of a given transferred amount of energy.)
**Low thermal capacity.** (A body or a co-ordination of bodies which can offer low thermal heat storage at a high temperature rise in the case of a given transferred amount of energy.)
**Heat transfer.** (The heat transfer which will primarily be used in connection with the present invention is a "heat pipe" between co-ordinated bodies, such as metal bodies, which are closely united with each other in order to create an effective heat transfer.)
**instantaneous temperature.** (The temperature which can be determined by the sensor unit, but taking into consideration the short time delay which will occur between a temperature rise generated by a transistor or a chip and the temperature detection within the sensor unit.)

### BACKGROUND OF THE INVENTION

Methods, arrangements and designs related to the above specified technical area and with a function and character which fulfill stipulated requirements are previously known in a number of different embodiments,

The intended application of the present invention is primarily at the fuse unit and the intended application is at, and connectable to, an electrically current fed circuit arrangement.

Such current fed circuit arrangements display: a voltage source, a fuse unit, a connecting and disconnecting unit for a connected current feed and one or more voltage and current feeding electrical circuits.

Fuse units are known in a number of different embodiments.

A first category of fuse units utilizes a thin wire, inserted in series with the feed cable and feed current of the electric circuit, and in the event of an excessively high current, and heat generation related thereto, the wire melts through and breaks the current circuit

A second category of fuse units is structured to sense current values, instantaneous and/or formed by mean value formation, and in the event of an excessively high current value to cause a mechanism, related to the connecting or disconnecting unit, to be affected to mechanically break the feed current.

The utilization of different types of bimetals and/or different types of circuit arrangement have been suggested as such affectable mechanisms for sensing current values and through mechanical designs and/or electronic circuits and causing the connecting or disconnecting unit to change to disconnected mode.

The fuse unit of relevant type has been designed to offer "slow blow/slow acting" or "fast blow/fast acting" functions, whereby an embodiment offering the slow acting function is intended to be able to allow rapidly occurring overcurrents without blowing, while an embodiment offering the fast acting function is not intended to be able to allow such overcurrents and therefore blows considerably faster.

The intended application of the present invention is in such electronic circuit arrangements and fuse units in which sensed current values must be evaluated by way of electronic circuits and in which the current values will primarily be evaluated by way of heat generation related to the current value.

Within the category for fuse units, utilization of so-called "electronic switch units" is also known.

As an example of the background of the technology and the technical field to which the invention is related, can be mentioned an electronic circuit in the form of an electronic switch unit with a temperature sensitive and temperature determining arrangement, connected in a current fed circuit arrangement, with a voltage source, a connecting and/or disconnecting unit for the current feed, and one or more voltage and current feeding electrical circuits, in which the utilized arrangement comprises: a sensor unit adapted to sensing of the temperature; a first electronic circuit arrangement, connected to the sensor unit, to determine an instantaneously occurring temperature; a sensor body enabling an electric current to flow through it and heatable by instantaneous current values; among other things, a part (the greater part) of the base plate absorbing the heat energy thus generated within the sensor body; and one or more cooling bodies to which a part of the heat energy absorbed by the base plate is adapted to be transferred.

In the present connection it is known that the sensor body can be fixed to the one surface length of the base plate so that effective heat conduction will occur between the sensor body and the base plate, primarily from the sensor body, while the oppositely placed and other surface length of the base plate must be so related to the cooling body that effective heat transfer will be able to occur between the base plate and the cooling body.

Electronic switch units of relevant type are previously known as such and a unit which will be possible to use to advantage within the present invention is a circuit unit which is based on one or more transistors allowing current to flow through, exemplified by MOSFET transistors.

Such switch units are specially adapted to be able to conduct current within chosen limits and with a moderate heat development.

In the case of a somewhat increasing current supply or current throughput, such units are adapted to "switch" the current (a function with fast on and off switches and with current-disconnecting intervening times) in order thus to limit the output power, and primarily the current feed.

This adjustment may take place within certain chosen limits and in which the temperature generated by the transistors is within the chosen value limits.

In the case of very fast current changes, in the event of powerful overcurrents or short circuits, it has been shown that the temperature sensing indicated here is much too slow and the temperature in the transistors has time to exceed its highest permitted value, approximately 160 °C, and melts before the detected temperature indicates an excessively high temperature and for that reason causes the transistor to switch off.

Units of the relevant type are normally combined with large cooling bodies with high thermal capacity, which contributes to undesirably slow temperature sensing and an imminent risk that the transistor will bum or melt, resulting in a complicated and costly replacement.

### DESCRIPTION OF THE PRESENT INVENTION

### TECHNICAL PROBLEMS

Taking into account the circumstance that the technical considerations which an expert in the technical field in question must make to be able to offer a solution to one or more posed technical problems are partly initially a necessary insight into those measures and/or that sequence of measures which must be taken, and partly a necessary choice of that or those means which are required, the subsequent technical problems should for this reason be relevant in the creation of the present invented object.

Taking into consideration the earlier standpoint of the technology as it is described above, it should therefore be seen as a technical problem to be able to realize the significance of, the advantages associated with and/or the technical measures and considerations which will be required in order to let the utilized arrangement, in a temperature sensitive arrangement, connected in a current fed circuit arrangement with a voltage source, an on and/or off switching unit for current feed and one or more voltage and current feeding electrical circuits, comprise:
a. a sensor unit adapted for sensing temperature,
b. a first circuit arrangement connected to the sensor unit in order to determine an instantaneously occurring temperature,
c. a sensor body through which an electric current can flow and which is heatable by instantaneous current values,
d. among other things, a part of the base plate absorbing the thus generated heat energy within and from the sensor body and/or
e. one or more cooling bodies, to which a part of the heat energy absorbed by the base plate is adapted to be transferred,
in which connection the sensor body is attached to the base plate such that effective heat transfer takes place between the sensor body and the base plate, in accordance with the introduction of claim 1 subsequent hereto, and in that connection to specify the utilization of a temperature controlled semiconductor circuit, with a markedly fast and high temperature sensitivity, responding to an instantaneous current feed to the circuit arrangement, which otherwise connects to the second category specified in the introduction.

There is a technical problem in being able to realize the significance of, the advantages associated with and/or the technical measures and considerations which will be demanded to allow the utilization of a sensor unit, adapted to sensing of the temperature, which must be attached to a sensor body and therefore its base plate.

There is a technical problem in being able to realize the significance of, the advantages associated with and/or the technical measures and considerations which will be demanded to allow a second surface length, allocated to the base plate, to have two separate surface areas allocated to it, a first surface area, intended to cooperate with and create a heat transfer to the cooling body in order to thus form a thermal co-ordination with a high thermal capacity, and a second surface area, intended to be free from direct cooperation with and intended for a direct heat transfer to the cooling body.

There is a technical problem in being able to realize the significance of, the advantages associated with and/or the technical measures and considerations which will be demanded to allow said sensor unit to be adapted to remain in good heat transferring cooperation with said second surface area.

There is a technical problem in being able to realize the significance of, the advantages associated with and/or the technical measures and considerations which will be demanded to allow the sensor unit to be adapted to cooperate with a heat transferring plate (a metal plate), thermally and mechanically fixed to the second surface area, in order to create a low thermal capacity between the sensor body and the sensor unit via the base plate.

There is a technical problem in being able to realize the significance of, the advantages associated with and/or the technical measures and considerations which will be demanded to allow said cooling body to be allocated to a surface length which connects to, or at least substantially connects to, a chosen surface length for the base plate and to allow the thermal capacity of the cooling body to increase with the thickness of the cooling body.

There is a technical problem in being able to realize the significance of, the advantages associated with and/or the technical measures and considerations which will be demanded to allow the sensor unit itself, outside its heat transferring plate, to be enclosed in a heat insulating layer, such as air.

There is a technical problem in being able to realize the significance of, the advantages associated with and/or the technical measures and considerations which will be demanded to allow the first surface area to be adapted to comprise as large a part as possible, typically at least 50%, of the second surface length of the base plate, typically up to approximately 80%.

There is a technical problem in being able to realize the significance of, the advantages associated with and/or the technical measures and considerations which will be demanded to let the chosen high thermal capacity encompass primarily the first surface area of the base plate and a thermally coordinated cooling body related to said first surface area.

There is a technical problem in being able to realize the significance of, the advantages associated with and/or the technical measures and considerations which will be demanded to allow, between the first surface area and a corresponding surface area for a cooing body, the effective heat transfer between the second surface length of the base plate and the cooling body to be adapted to take place via a heat conducting foil.

There is a technical problem in being able to realize the significance of, the advantages associated with and/or the technical measures and considerations which will be demanded to specify that effective heat transfer between the base plate and one or more cooling bodies must be adapted to take place via one or more heat conducting foils.

There is a technical problem in being able to realize the significance of, the advantages associated with and/or the technical measures and considerations which will be demanded to allow this foil or these foils, to be adapted to display a cutout matching the sensor unit and/or the plate.

There is a technical problem in being able to realize the significance of, the advantages associated with and/or the technical measures and considerations which will be demanded to allow inside said removed section said sensor unit to be fixed to the base plate such that effective heat transfer occurs between the sensor unit and the base plate.

There is a technical problem in being able to realize the significance of, the advantages associated with and/or the technical measures and considerations which will be demanded to allow the edge(s) of said cutout to be related to said foil.

There is a technical problem in being able to realize the significance of, the advantages associated with and/or the technical measures and considerations which will be demanded to allow said cutout to display a divergent shape with regard to its boundary surfaces.

There is a technical problem in being able to realize the significance of, the advantages associated with and/or the technical measures and considerations which will be demanded to allow said cutout to be adapted so that said sensor unit is oriented close to a silicon plate heatable by the electric current and/or chip with transistors or corresponding integral with/included in the sensor body.

There is a technical problem in being able to realize the significance of, the advantages associated with and/or the technical measures and considerations which will be demanded to allow one or more electrical circuit arrangements, built up of semiconductor material, composing, among other things, one or more chips with chosen transistors, to be formed for said silicon plate.

There is a technical problem in being able to realize the significance of, the advantages associated with and/or the technical measures and considerations which will be demanded for a thin foil, such as a copper foil, with a thickness matching or less than the thickness of a cooling body, to be chosen as said intervening heat conducting foil.

There is a technical problem in being able to realize the significance of, the advantages associated with and/or the technical measures and considerations which will be demanded to allow said foil to be adapted with a lower heat storing capacity and said base plate to be adapted with a higher heat storing capacity.

There is a technical problem in being able to realize the significance of, the advantages associated with and/or the technical measures and considerations which will be demanded to allow the heat storing capacity allocated within the foil and the heat storing capacity allocated within the base plate together to be adjusted lower than the heat capacity storable in the cooling body.

There is a technical problem in being able to realize the significance of, the advantages associated with and/or the technical measures and considerations which will be demanded to allow said sensor body to comprise one or more transistor connections with among other things MOSFET transistors, one or more thyristors and/or one or more transistors coordinated therewith.

There is a technical problem in being able to realize the significance of, the advantages associated with and/or the technical measures and considerations which will be demanded to allow said sensor unit to generate and emit a temperature dependent and/or temperature sensitive output signal to said first circuit arrangement, which in turn must be connected to or integral with a fast acting control circuit related circuit arrangement, adapted to serve as a short circuit protection.

There is a technical problem in being able to realize the significance of, the advantages associated with and/or the technical measures and considerations which will be demanded to allow said sensor unit to generate and emit a temperature dependent and/or temperature sensitive output signal to the aforementioned first circuit arrangement, which in turn must be connected to a control circuit related circuit arrangement, adapted to serve as an overcurrent protection.

There is a technical problem in being able to realize the significance of, the advantages associated with and/or the technical measures and considerations which will be demanded to allow the above-mentioned control circuit related circuit arrangement to comprise/contain a first circuit unit or module, to determine and follow the instantaneous values of the temperature and/or the current.

There is a technical problem in being able to realize the significance of, the advantages associated with and/or the technical measures and considerations which will be demanded to allow the above-mentioned control circuit related circuit arrangement to comprise/contain a second circuit unit or module, to determine and follow values for the time derivative of a temperature change.

There is a technical problem in being able to realize the significance of, the advantages associated with and/or the technical measures and considerations which will be demanded to allow the sensor unit to be fixed to the first surface length of the base plate without direct mechanical contact with the aforementioned foil.

There is a technical problem in being able to realize the significance of, the advantages associated with and/or the technical measures and considerations which will be demanded to allow the sensor unit to be fixed to the second surface length of the base plate somewhat embedded in the base plate and/or cooling body, partly in order to reduce the thickness of the foil.

There is a technical problem in being able to realize the significance of, the advantages associated with and/or the technical measures and considerations which will be demanded to allow said sensor unit to be inserted into and covered by a cutout in said cooling body.

There is a technical problem in being able to realize the significance of, the advantages associated with and/or the technical measures and considerations which will be demanded to allow said foil to be allocated a thickness of between 1.0 and 0.5 millimeters.

There is a technical problem in being able to realize the significance of, the advantages associated with and/or the technical measures and considerations which will be demanded to allow the sensor unit to be affixed to the base plate with a separate metal screw or by means of a heat conductive adhesive.

### THE SOLUTION

The present invention emanates from the known technology specified in the introduction in which a temperature sensitive and temperature sensing arrangement must include/comprise: a temperature sensing sensor unit, a first circuit arrangement, a sensor body heatable by an electric current, a base plate transferring heat energy generated within and from the sensor body, and/or one or more cooling bodies transferring heat energy from the base plate, and in which the sensor body must be attached to the base plate such that effective heat transfer occurs between the sensor body and the base plate, in accordance with the preconditions which are detailed in the introduction of claim 1,

In order to solve one or more of the above-mentioned technical problems, the present invention more particularly specifies that a second surface length allocated to the base plate must be allocated two separate surface areas: a first surface area, intended to cooperate with and create heat transfer to the cooling body in order to form thermal cooperation with a high thermal capacity, and a second surface area intended to be placed free of direct cooperation with, and for a heat transfer to, the cooling body, and that said sensor unit must be adapted to be in heat transferring cooperation with said second surface area,

As suggested embodiments falling within the framework of the present invention it is specified that the sensor unit must be adapted to cooperate with a heat conducting plate attached to the second surface area, in order to create low thermal capacity between the sensor body and the sensor unit via the base plate.

Moreover, it is specified that said cooling body must be allocated a surface length which connects with, or at least substantially connects with, a chosen surface length for the base plate.

The sensor unit must be enclosed by a heat insulating layer, such as air.

The first surface area chosen must be as large as possible and must thus be adapted to include at least 50% of the second surface length of the base plate, typically approximately 80%.

The high thermal capacity must primarily include the first surface area of the base plate and a cooling body coordinated therewith.

Between the first surface area and a corresponding surface area for a cooling body, the effective heat transfer between the second surface length of the base plate and the cooling body must be adapted to be able to take place via a heat conducting foil,

Said temperature sensing sensor unit must be so attached in relation to the base plate that effective heat transfer between the sensor body and the base plate will also occur between the sensor unit and the base plate, that an effective heat transfer must be adapted to take place via a heat conducting foil, whereby this foil is adapted to display a cutout and/or a hole and that within said cutout or hole said sensor unit must be directly attachable to the base plate,

As suggested embodiments, falling within the framework for the basic idea of the present invention, it is furthermore specified that said cutout must be in the shape of a hole centered on the sensor body in, or related to the edge of, said foil.

Said cutout can then display a divergent form pertaining to its boundary surfaces.

Said cutout can be adapted such that said sensor unit is oriented near a silicon plate belonging to the sensor body and heatable by the electric current, with structured chips and transistors or equivalent.

Said silicon plate can then, within the sensor body, be formed with one or more electrical circuit arrangements, including, among other things, one or more chips with allocated transistors.

More specifically it is suggested that a thin heat conducting foil, such as a copper foil, is chosen as said foil,

Said foil can then be adapted with a lower heat storing capacity and said base plate must be adapted with a higher heat storing capacity.

The heat storing capacity in the foil and the heat storing capacity in the base plate must together be adjusted lower than the heat capacity storable in the cooling body.

Said sensor body can preferentially contain a chip, with one or more MOSFET transistors, thyristors and/or transistor connection.

The invention specifies more particularly that a temperature dependent output signal produced or generated from said sensor unit must be connected to a control circuit related first circuit arrangement, adapted to be able to serve as a fast short circuit protection.

Said sensor unit with its temperature dependent output signal must be connected to a control circuit related second circuit arrangement, adapted to serve as an overcurrent protection,

Furthermore it is suggested that said control circuit related circuit arrangement must be able to include a first module to determine and/or follow the instantaneous values of the temperature.

Said control circuit related circuit arrangement can also include a second module to determine and/or follow the values for the time derivative of a temperature.

Furthermore it is suggested that the sensor unit should be directly fixed to the base plate of the sensor body, but without direct mechanical contact with said foil.

Said sensor unit can then be somewhat embedded in the base plate and/or said sensor unit may be somewhat embedded in a cutout in said cooling body, in order to reduce the thickness of the foil.

The sensor unit can be attached with a separate metal screw to a threaded hole in the base plate.

### ADVANTAGES

The advantages that can principally be regarded as characteristic of the present invention and the particularly typical characteristics specified thereby are that preconditions have hereby been created for an arrangement, connected to a current fed circuit arrangement with a voltage source, an on and/or off switching unit for the feed current and one or more voltage and current feeding electrical circuits for protecting temperature sensitive electrical and/or electronic components, such as transistors allowing current to flow through, from current dependent overheating and thereby create preconditions in order to also, in the case of a rapid current increase, quickly be able to disconnect a load through the influence of/by means of a unit disconnecting the feed current.

More particularly it is a question of obtaining a rapid and correct evaluation of the feed current via a sensed temperature, where the temperature sensitive sensor unit must be placed very dose to one or more heat generating chips with structured transistors and with a short heat conduction path and small thermal capacity to said chip or chips, and surrounded by a comparatively large heat storing capacity.

That which foremost can be regarded as characteristic of the present invention is specified below in claim1, characteristics part.

### BRIEF DESCRIPTION OF THE DRAWINGS

An embodiment suggested at present displaying typical features associated with the present invention will now be described more closely by way of exemplification with reference to the accompanying drawings, in which:
**Figure 1** shows a simplified circuit diagram of an electrical current fed circuit arrangement with a temperature sensitive and temperature determining arrangement, in accordance with the specifications of the invention, intended primarily to be able to affect an on and off switching unit so that it switches to off position for the current feed and during utilization of an electronic switch unit,
**Figure 2** shows parts of the arrangement with parts of the switch unit and a sensor unit adapted for temperature sensing, in accordance with Figure 1, in a side view and with an inset for the sensor unit, illustrated on an enlarged scale,
**Figure 3** reveals, in a perspective exploded view, the different parts of the temperature sensitive arrangement and the switch unit,
**Figure 4** reveals a sensor body with its base plate and a foil inserted from below, with an inserted temperature sensing sensor unit and
**Figure 5** shows a temperature/time diagram, with the diagram representative of a generated signal, dependent on the temperature, and which via a control circuit related first circuit arrangement is adapted for control of a circuit breaking switch unit,

### DESCRIPTION OF THE EMBODIMENT NOW PROPOSED

It should be emphasized by way of introduction that in the subsequent description of a presently proposed embodiment, which displays the typical features associated with the invention and which is clarified through the figures in the drawings below, we have chosen terms and a special terminology with the principal aim of thereby clarifying the concept of the invention.

It must be borne in mind, however, in this context that expressions chosen here must not be seen as limiting only to the terms utilized and chosen here, but it is to be understood that every such chosen term is to be interpreted so that it in addition includes all technical equivalents that function in the same or essentially the same way, in order thus to achieve the same or essentially the same intention and/or technical effect.

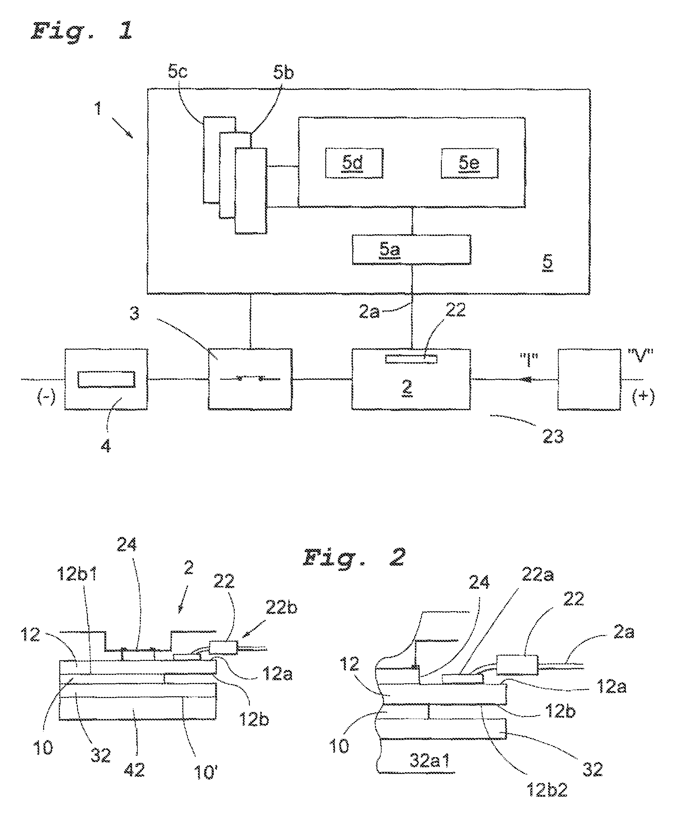

Consequently, with reference to the appended figures 1 to 5, not only the present invention but likewise the typical features associated with the invention have been concretized schematically and in detail through the embodiment now proposed and more closely described below,

Accordingly, Figure 1 shows an electrical current fed circuit arrangement 1, illustrated here with a voltage source "V" intended to supply a closed direct current circuit with a current "I".

Furthermore, there exists a circuit arrangement or a sensor body 2, in accordance with the specifications of the invention, coordinated with control equipment or a control circuit 5, designable in compliance with the basic preconditions for the second category of fuse units and incorporated in a switch unit 23 with an electric circuit breaker 3.

The circuit arrangement or sensor body 2 comprises a temperature sensing sensor unit 22, whose nature and function will be more closely described below.

Circuit arrangement 1, with its sensor body 2 and circuit breaker 3 within the switch unit 23, also includes an overload 4.

The sensor body 2 is connected to control equipment or a control circuit 5, via a connection bus 2a, which is equipped for its function with circuits, circuit arrangements, modules and a processor unit, with allocated memories of as such in principle known type.

The circuit arrangement 1 is illustrated here as an arrangement working on direct current (+) (-), but can of course in known fashion be adapted for alternating current.

More particularly, the present invention comprises a temperature sensitive circuit arrangement or a sensor body 2, in which this arrangement 1 comprises: a sensor unit 22 adapted to sense temperature; a first circuit arrangement 5a connected to the sensor unit, to be able to determine an instantaneously occurring temperature; a sensor body, in the form of a semiconductor 24, through which an electric current can flow and heatable by instantaneous current values; among other things a part of the base plate absorbing the heat energy generated in the sensor body 2 and/or one or more cooling bodies 32, 42, to which heat energy is adapted to be transferred.

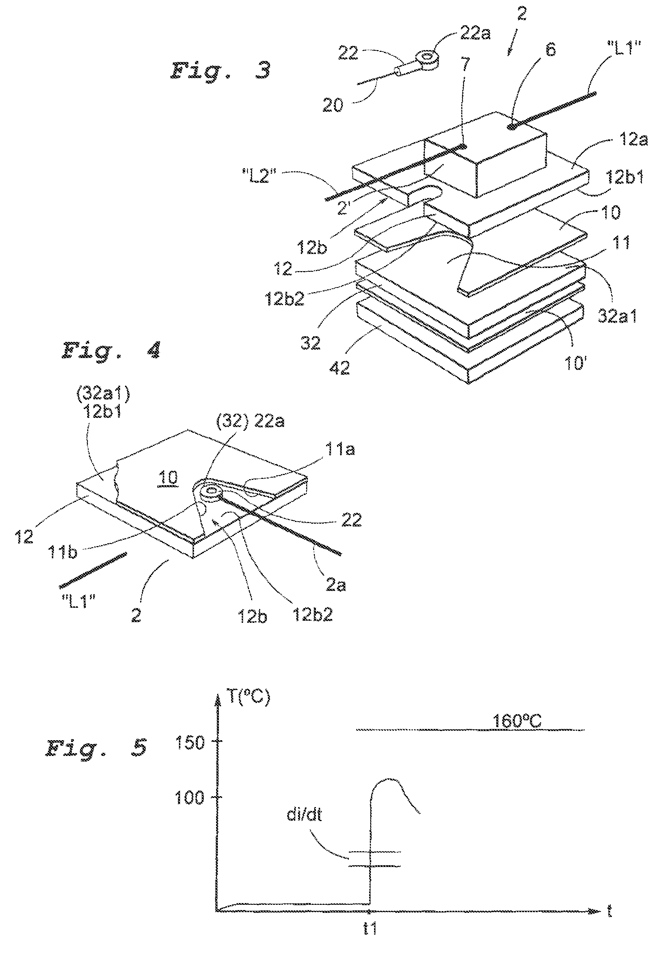

With reference to Figures 2 and 3, the design of sensor body 2 is illustrated in more detail.

Sensor body 2 is related to the one (the inner, upper) surface length of the base plate 12 such that effective heat transfer will take place between the sensor element or semiconductor element 24 and the base plate 12, while the oppositely placed and other (outer, lower) surface length 12b is related to an adjacent cooling body 32 such that effective heat transfer will take place between the base plate 12 and the cooling body 32.

In accordance with the specifications for the present invention, Figure 4 illustrates that the other surface length 12b of the base plate must be allocated two separate surface areas: a first surface area 12b1, intended to cooperate with and create a heat transfer to the cooling body (32), in order thus to form a thermal coordination with a high thermal capacity, and a second surface area 12b2, intended to be free from direct cooperation with, and a direct heat transfer via heat pipe/conduction/conductor to, the cooling body (32), and that said sensor unit 22 is adapted to be in direct or indirect heat-transfer cooperation , via a plate 22a, with said second surface area 12b2 in that the sensor unit 22 is placed against the upper surface length 12a of the base plate 12.

The sensor unit 22 here is adapted to cooperate with said heat transferring plate 22a, although with good heat conducting ability to the second surface area or surface length 12a, in order to create a low thermal capacity and good thermal heat conducting ability between the sensor body 24 and the sensor unit 22 via the base plate 12.

In accordance with the basic principle of the invention this distance must be made as short as possible and with as large a heat transferring and heat conducting area as possible. It would be optimal to have the sensor unit 22 inserted in a shaped central hole (not shown) in the base plate 12 and/or in the cooling body 32 and in immediate connection to the sensor body 24.

There is nothing to prevent the plate 22a and or the sensor unit 22 from being located beside and around the sensor body 24 within the electronic switch unit.

Said cooling body 32 is allocated a surface length which connects to, or at least substantially connects to, a chosen surface length for the base plate 12.

The sensor unit 22 here is enclosed in a heat insulating layer 22b, such as air, thus not in direct contact with objects with good heat conducting ability, such as metal objects, in order to increase the thermal capacity.

The first surface area 12b1 must be dimensioned for the largest possible surface expansion and the largest possible heat transferring or heat conducting contact area to the cooling body 32 or similar and must in practice be adapted to comprise at least 50% of the second surface length 12b of the base plate, typically about 80%.

The high thermal capacity pertaining to the invention comprises then principally the first surface area 12b1 of the base plate and a cooling body 32 coordinated therewith, with an intervening foil 10.

The dimensioning of the required high thermal capacity must therefore be adapted to the preconditions that must apply to allow the rapid transfer of excess heat generated by short circuit currents, during extremely short periods of time to the sensor unit 22.

It is advantageous to keep the volume of the high thermal capacity, in terms of dimensions, as small as possible, in order to save space in the electronic switch unit 23, but within the framework of its technical function.

Between the first surface area 12a1 and a corresponding surface area (32a1) for a cooling body 32, the effective heat transfer between the second surface length 12b of the base plate 12, and the cooling body (32) is adapted to take place via a heat conducting foil 10, according to Figure 4.

According to the specifications of the invention, this sensor body 2 must comprise a sensor body unit 2', which is connected in series to the feed current "I" via the wires "L1" and "L2" and connector pins 6, 7 or similar belonging to them and which the sensor body unit 2', includes a set of semiconductor elements 24, which allow heat to be produced depending on the instantaneous (or mean value forming) value of a feed current "I" passing through it

The sensor body unit 2' is directly mounted on and resting on the base plate 12 and with the heat generating semiconductor elements 24 oriented very dose to upper area 12a of the base plate 12 for a direct transfer of generated heat via a /heat conductor/heat pipe/heat conduction to the first surface area 12b1 of the base plate 12.

Located between the base plate 12 of the sensor body 2 and one or more cooling bodies 32, 34 is the thin heat conducting foil 10, but with a adapted cutout 11 to be able to cooperate with the plate 22a for the sensor unit 22.

The sensor body 2 with semiconductor unit 24 is attached to the base plate 12 in such a way that effective heat conduction occurs between the unit 24 and the base plate 12 via as large a surface extension as is practicable.

The sensor unit 22 must be oriented close to, and preferably in a cutout in, the base plate 12 to minimize the heat conducting distance and thereby offer an accurate and rapid temperature measurement.

A rapidly increasing energy emission from the semiconductor element 24 and its transistors will "immediately" be perceived as a temperature rise in the sensor unit 22, while excess heat generated for this measurement is otherwise transferred to surface length 12b1 of the base plate 12.

The invention specifies more particularly that the effective heat conduction of excess heat must be adapted to take place via an inherently soft and heat conducting foil 10.

Within said cutout 11, said sensor unit 22 is fixed to the base plate 12 in such a way that effective heat conduction takes place concentrated between the sensor unit 22 and the base plate 12 and in which a temperature difference between the heat generating chip(s) with transistors 24a of the sensor body unit 2'and its elements 24, via the base plate 12 and the sensor unit 22, can be kept as small as possible.

Said cutout 11 is illustrated here related to the edge of said foil 10 and said cutout 11 displays a divergent shape, with regard to its boundary surfaces 11a, 11b (See Figure 4).

Said cutout 11 is furthermore shown here adapted such that said sensor unit 22 with its plate 22a can be oriented very dose to a silicon plate or corresponding chip or transistor 24a, heatable by the electric current.

For said silicon plate one or more electrical circuit arrangements, including one or more chips, must then be formed in a known way.

Said foil 10 chosen here is a copper foil, with a surface length which effectively transports heat from the base plate 12 to the cooling body 32, and keeps separate/separates the sensor unit 22 from the foil 10 and/or cooling body 32.

Said foil 10 is adjusted to a low heat storing capacity and a good heat conducting ability and said base plate 12 is adjusted to a higher heat storing capacity and a good heat conducting ability.

The heat storing capacity allocated in the foil 10 and the heat storing capacity allocated in the base plate 12 must together be adjusted lower than the capacity stored in cooling body 32 and/or 34, with an intervening foil 10'.

Said sensor unit 22 must then include one or more semiconductor elements 24, such as MOSFET transistors 24a, IGBT transistors, thyristors and/or other transistors and their arrangements.

A temperature dependent output signal from said sensor unit 22 on a wire 2a is connected via control unit functions or control circuit related functions to a second circuit arrangement 5b, adapted to serve as a short circuit protection and break the current feed "I".

The temperature dependent output signal 2a from said sensor unit 22 can also be connected to a third circuit arrangement 5c, adapted to serve as an overcurrent protection,

Said control unit related circuit arrangement can then include a first module 5d, to determine and follow the instantaneous values of the temperature, according to Figure 5.

Said circuit arrangement can then include a second module 5e, to determine the value for the time derivative of a temperature (di/dt), illustrated in Figure 5.

Figure 5 illustrates schematically a heating curve in a temperature/time diagram, at a chosen temperature difference between the heat generating sensor body 24 and its element(s) and the temperature sensing sensor unit 22, which (temperature), in accordance with the specifications of the invention, must be kept as low as possible.

Figure 5 is meant to illustrate that up to the point of time "t1" a small and constant heat emission from element 24 takes place, based on a normal current value "I".

At this point of time "t1", an overcurrent or a short circuit current occurs and the heat of the element 24 rises dramatically to 120°C, upon which the current "I" is disconnected and a cooling sequence begins before the temperature of transistor 24a rises to 160°C, at which the element 24 is overheated and destroyed.

The excess heat separate from the actual temperature measurement must be distributed to the surface length of the base plate 12 via the surface length of the foil 10, to the cooling body 32, without appreciably affecting the temperature sensing of the sensor unit 22.

The invention is of course not limited to the above example of embodiment, but can undergo modifications within the scope of the idea behind the invention illustrated in the patent claims below.

Particular consideration should be given to the fact that every unit and/or circuit shown can be combined with each other unit and/or circuit shown within the framework of being able to achieve the desired technical function.

### List of reference symbols used

"V" = Voltage source, direct current
"I" = Variable current value that generates heat in a semiconductor element (24)
"L1" = Feed wire
"L2" = Feed wire
1 = Current fed circuit arrangement
2 = A sensor body through which current "I" can flow
2' = Sensor body unit
2a = Connection wire between sensor unit (22) and control unit (5)
3 = Electronic circuit breaker within a switch unit (23)
4 = Load
5 = Control equipment or control unit
5a = First circuit arrangement for determining of the temperature
5b = Second circuit arrangement as short circuit protection
5c = Third circuit arrangement as overcurrent protection
5d = First module that follows the temperature
5e = Second module that calculates the time derivative of the temperature (di/dt)
6 = Connector pin
7 = Connector pin
10 = A heat transferring foil located between the base plate (12) and the cooling body (32)
10' = A heat transferring foil located between the cooling bodies (32, 34)
11 = Cutout in the foil (10)
12 = Base plate
12a = The one, inner and upper, surface length
12b = The other, outer and lower, surface length
12b1 = First surface area
12b2= Second surface area
22 = Temperature sensing sensor unit
22a = Heat transferring plate
22b = Heat insulating layer
23 = Switch unit, with sensor body (2) and circuit breaker (3)
24 = Heatable sensor body, semiconductor element(s)
24a = Chip with transistor
32 = First cooling body, coordinated with base plate (12)
42 = Second cooling body, coordinated with a first cooling body

## Claims

1. An arrangement for instantaneous temperature sensing and temperature determining (1), comprising:
a. a sensor unit adapted to sense the temperature (22),
b. a first circuit arrangement connected to the sensor unit to determine an occurring temperature,
c. a sensor body (2) through which an electric current can flow and heatable by instantaneous currents,
d. among other things, a part of the base plate (12) absorbing the thus generated heat energy within the sensor body and
e. one or more cooling bodies (32), to which a part of the heat energy absorbed by the base plate (12) is adapted to be transferred,
in which the sensor body (2) is related to the one surface length (12a) of the base plate such that effective heat transfer will take place between the sensor body (2) and the base plate (12), while the oppositely placed and other surface length (12b) of the base plate is related to the cooling body (32) such that effective heat transfer will take place between the base plate and the cooling body, **characterized in that** the other surface length (12b) of the base plate is allocated to two separate surface areas (12b1), a first surface area intended to cooperate with and create heat transfer to the cooling body in order to form a thermal coordination with a high thermal capacity, and a second surface area (12b2) intended to be free/separate from direct cooperation with, and for direct heat transfer to, the cooling body, and **in that** said sensor unit is adapted to be in heat transferring cooperation with said second surface area.

2. Arrangement according to claim 1, **characterized in that** the sensor unit is adapted to cooperate with a heat transferring plate, attached to the second surface area, to create a low thermal capacity between the sensor body and the sensor unit via the base plate.

3. Arrangement according to claim 1 or 2, **characterized in that** said cooling body is allocated a surface area which is connected to, or at least substantially connected to, a chosen surface length of the base plate.

4. Arrangement according to any one of the preceding claims, **characterized in that** the sensor unit is enclosed in a heat insulating layer, such as air.

5. Arrangement according to claim 1, **characterized in that** the first surface area is adapted to comprise at least 50% of the second surface length of the base plate.

6. Arrangement according to claim 1 or 3, **characterized in that** the high thermal capacity is primarily based on the first surface area of the base plate and a coordinated cooling body pertaining thereto.

7. Arrangement according to claim 1 or 6, **characterized in that** between a first surface area and a corresponding second surface area for a cooling body, the effective heat transfer between a surface area of the base plate and a cooling body is adapted to take place via a heat conducting foil.

8. Arrangement according to claim 7, **characterized in that** the heat conducting foil and/or the cooling body is adapted to display a cutout and/or a hole and that in said cutout or hole the heat transferring plate of said sensor unit is fixed to the base plate.

9. Arrangement according to claim 1 or 8, **characterized in that** said cutout is related to the edge of the surface length of said foil.

10. Arrangement according to claim 7, 8, or 9, **characterized in that** said cutout displays a divergent shape with regard to its boundary surfaces.

11. Arrangement according to claim 1 or 8, **characterized in that** said cutout and/or hole is adapted such that said sensor unit can be oriented dose to the sensor body heatable by the electric current, oriented adjacent to the one surface length of the base plate and related to a silicon plate, a chip with transistors or equivalent.

12. Arrangement according to any one of the preceding claims, **characterized in that** one or more electrical and/or electronic circuit arrangements are formed to a silicon plate, including, among other things, one or more chips with transistors.

13. Arrangement according to claim 1 or 7, **characterized in that** for said foil is chosen a relatively soft heat transferring foil-shaped material, such as a copper foil.

14. Arrangement according to claim 3 or 7, **characterized in that** said foil is adapted with a lower thermal capacity than said base plate and/or said cooling body.

15. Arrangement according to claim 1, 7 or 14, **characterized in that** the thermal capacity allocated to the foil and the thermal capacity allocated to the base plate are together adjusted lower than the thermal capacity allocated to the cooling body.

16. Arrangement according to claim 1, 11 or 12, **characterized in that** said heatable sensor body comprises one or more MOSFET transistors, IGBT transistors, thyristors and/or transistors coordinated in a second circuit arrangement.

17. Arrangement according to claim 1, **characterized in that** a temperature dependent output signal emitted from said sensor unit and from the first circuit arrangement belonging thereto is connected to a third circuit arrangement adapted to serve as a short circuit protection.

18. Arrangement according to claim 1, **characterized in that** a temperature dependent output signal emitted from said sensor unit and from the first circuit arrangement belonging thereto is connected to a fourth circuit arrangement adapted to serve as an overcurrent protection.

19. Arrangement according to claim 18, **characterized in that** said first circuit arrangement comprises a first module for determining and following the instantaneous value of the temperature.

20. Arrangement according to claim 18 or 19, **characterized in that** said first circuit arrangement comprises a second module for determining the values of the time derivative of a temperature.

21. Arrangement according to claim 1 or 2, **characterized in that** the sensor unit is fixed to the second surface length of the base plate and its second surface area without mechanical direct contact with said foil.

22. Arrangement according to claim 1 or 21, **characterized in that** said sensor unit is attached to the base plate and one of its two surface lengths.

23. Arrangement according to claim 1, **characterized in that** said foil is allocated a thickness of less than 1.0 millimeter and adapted for effective heat transfer via a distinct heat pipe/heat conductor.
